# EUROPEAN PATENT SPECIFICATION

(11) **EP 3 996 555 B1**
(45) Date of publication and mention of the grant of the patent: **08.07.2026**
(21) Application number: 20840292.5
(22) Date of filing: 09.07.2020
(51) Int. Cl.: A47C 27/08

(54) **A TENSIONING MEMBER FOR AN INFLATABLE PRODUCT AND A METHOD FOR MANUFACTURING A TENSIONING MEMBER AND INFLATABLE PRODUCT**
SPANNELEMENT FÜR EIN AUFBLASBARES PRODUKT UND VERFAHREN ZUR HERSTELLUNG EINES SPANNELEMENTS SOWIE AUFBLASBARES PRODUKT
ÉLÉMENT DE TENSION POUR UN PRODUIT GONFLABLE ET SON PROCÉDÉ DE FABRICATION

(30) Priority: 12.07.2019 CN 201910627640; 12.07.2019 CN 201921087362 U
(43) Date of publication of application: 18.05.2022
(73) Proprietor: Bestway Inflatables & Material Corp., Shanghai 201812 (CN)
(72) Inventor: HUANG, Shuiyong, Shanghai 201812 (CN)
(74) Representative: Inchingalo, Simona
(86) International application number: PCT/CN2020/100973
(87) International publication number: WO 2021/008426

(56) References cited:
- CN-A- 105 615 393
- CN-A- 106 073 292
- CN-U- 201 894 413
- CN-U- 208 822 111
- CN-U- 210 446 353
- CN-Y- 2 241 484
- JP-A- H01 230 303
- US-A- 5 031 260
- US-A- 5 249 319
- US-A1- 2007 277 324
- US-A1- 2015 335 164

## Description

### CROSS-REFERENCE TO RELATED APPLICATION

The present application claims priority to Chinese Patent Application Ser. No. CN201921087362.3, filed on July 12, 2019, and Chinese Patent Application Ser. No. CN201910627640.8, filed on July 12, 2019.

### TECHNICAL FIELD

The present invention relates generally to a tensioning member for an inflatable product and a method of manufacturing a tensioning member and an inflatable product.

### BACKGROUND

Inflatable products, such as inflatable pools, inflatable rafts, and inflatable mattresses, are widely used outdoors, in water sports or as household products due to their lightweight and easy storage.

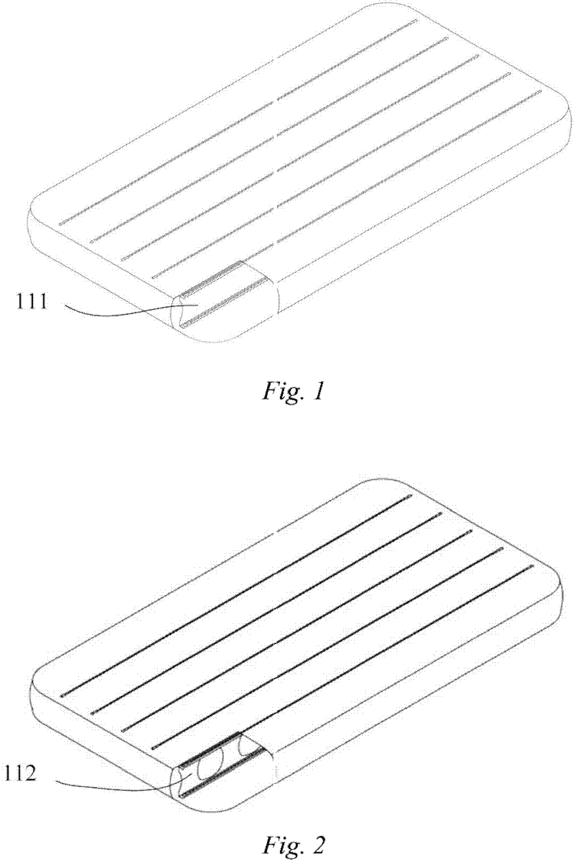

In the inflatable products, a tensioning member is typically used to couple chamber walls of the inflatable product to form and maintain a predetermined shape after inflation. As best shown in Figure 1, a tensioning member **111** in an existing inflatable product is generally in the form of a complete sheet. One side of the tensioning member **111** is coupled to an upper inflatable chamber wall of an inflatable mattress, while the other side of the tensioning member **111** is coupled to a lower inflatable chamber wall of the inflatable mattress. After the inflatable mattress has been inflated, the holding force of the tensioning member on the upper and lower inflatable chamber walls of the inflatable mattress causes the entire inflatable chamber to maintain the desired mattress shape. The consumption of material for making the current tensioning members is usually very large when manufacturing the inflatable mattress. To reduce the material of the tensioning member and form a predetermined pattern, as best illustrated in Figure 2, a plurality of holes can be punched in the middle portion of the tensioning member **112,** leaving the tensioning member with apertures **112.** However, the materials removed during punching are difficult to recycle, resulting in waste of resources and increased manufacturing costs. An example of such a tensioning member, known in the prior art, is disclosed in document CN106073292, which discloses a straight-brace inflatable mattress, characterized in that each straight brace or tensioning member is provided with a plurality of through holes. A similar device is disclosed in US5031260A.

### SUMMARY OF THE INVENTION

The present invention is defined according to the independent claims 1, 6 and 9 and resolves the existing problems above as well as other problems by, among other things, providing a tensioning member wherein, when manufacturing the tensioning member, at least two tensioning members can be formed from a single sheet of material used to make a traditional sized (or any other desired size) tensioning members. In other words, the present invention can form at least two separate tensioning members from a single sheet of material which can be used as two separate tensioning members. This results in a reduction of the material and manufacturing costs for making the tensioning members. The tensioning members of the present invention also have the advantages of being lightweight. Moreover, the tensioning members can be coupled to each other or assembled together via a connector to form various shapes.

It is an aspect of the present invention to provide an inflatable product according to claim 1 comprising a tensioning member.

It is another aspect of the present invention to provide a method as defined in claim 6 for manufacturing a tensioning member for an inflatable product.

It is another aspect of the present invention to provide a method as defined in claim 9 for manufacturing an inflatable product.

### BRIEF DESCRIPTION OF THE DRAWINGS

Other features and advantages of the present invention will be better understood from exemplary embodiments hereinafter described in detail with reference to the accompanying drawings. In the accompanying drawings, the same or similar reference numerals represent the same or similar components, in which:
Figure 1 is a perspective view of an inflatable mattress including a tensioning member constructed in accordance with the prior art;
Figure 2 is a perspective view of an inflatable mattress including a tensioning member constructed in accordance with the prior art;
Figure 3 is a side view of a tensioning member for an inflatable product constructed according to an embodiment of the present invention;
Figures 4a and Figure 4b are perspective views of an inflatable mattress including a tensioning member constructed according to an embodiment of the present invention;
Figures 5a and Figure 5b are perspective views of an inflatable pool including a tensioning member constructed according to an embodiment of the present invention;
Figure 6a is a perspective view of an inflatable mattress including a tensioning member constructed according to an embodiment of the present invention;
Figure 6b is an enlarged partial view of the inflatable mattress of Figure 6a;
Figure 6c is a perspective view of an inflatable mattress including a tensioning member constructed according to an embodiment of the present invention;
Figure 7a is a perspective view of an inflatable mattress including a tensioning member constructed according to an embodiment of the present invention;
Figure 7b is an enlarged partial view of the inflatable mattress of Figure 7a;
Figure 8 is an enlarged partial view of the inflatable mattress including a tensioning member constructed according to an embodiment of the present invention;
Figures 9a-9d are side views of tensioning members manufactured according to a method of the present invention;
Figures. 10a to 10d are flowcharts of methods for manufacturing an inflatable product according to embodiments of the present invention;
Figs. 11a to 11d are side views of tensioning members manufactured according to a method of the present invention; and
Fig. 12 is a cross-sectional view of tensioning members in an inflatable product according to embodiments of the present invention.

### DETAILED DESCRIPTION OF THE INVENTION

The implementation and application of the embodiments of the present invention will be discussed in detail below. However, it should be understood that the specific embodiments discussed only illustratively the various implementation and use of the present invention, and are not intended to limit the scope of the present invention. In the description, the structural positions of various components, e.g., upper, lower, top, bottom, etc., are not absolute, but relative. The orientation expressions are appropriate when the various components are arranged, as shown in the Figures, but should change accordingly when the positions of the various components in the Figures change.

As used herein, the "first", "second", and "third" cannot be used to limit the order and the number of components unless otherwise specifically stated.

An inflatable product containing at least one tensioning member **111, 112** constructed in accordance with the prior art is generally shown in Figures 1 and 2. As best illustrated in Figure 1, the tensioning member **111** in the existing inflatable product is generally in the form of a complete sheet. One side of the tensioning member **111** couples to an upper inflatable chamber wall of an inflatable mattress, while the other side of the tensioning member **111** couples to a lower inflatable chamber wall of the inflatable mattress. After the inflatable mattress has been inflated, a holding force of the tensioning member **111** on the upper and lower inflatable chamber walls of the inflatable mattress causes the entire inflatable chamber to form a predetermined rectangular shape, i.e., a mattress shape. It should be noted that material consumption and costs for making the tensioning member **111** in existing inflatable products are typically very large. To reduce these costs, the tensioning member **111** is designed to have a predetermined pattern. For example, as best illustrated in Figure 2, a plurality of holes can be punched in the middle portion of the tensioning member **112.** However, the materials removed during punching are difficult to recycle, resulting in waste of resources and increased manufacturing costs.

The present invention resolves the and other above problems by, among other things, providing a tensioning member wherein, when manufacturing the tensioning member, at least two tensioning members can be formed from a single sheet of material used to make a traditional sized (or any other desired size) tensioning member. In other words, the present invention can form at least two separate tensioning members from a single sheet of material which can be used as two separate tensioning members. This results in a reduction of the material and manufacturing costs for making the tensioning members. The tensioning members of the present invention also have the advantages of being lightweight. Moreover, the tensioning members can be coupled to each other or assembled together via a connector to form various shapes.

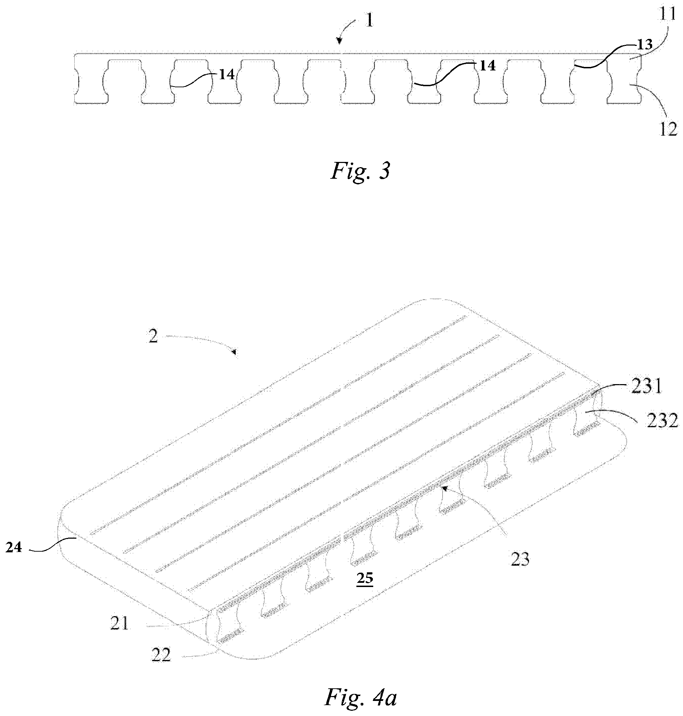

Figure 3 shows a tensioning member **1** constructed in accordance with an embodiment of the present invention. The tensioning member **1** comprises a base **11** and a plurality of protrusions **12.** The plurality of protrusions **12** are coupled to the base **11** wherein each protrusion of the plurality of protrusions **12** extends from the base **11** in a same direction and are spaced apart from one another. According to an embodiment of the present invention, the base **11** and the plurality of protrusions **12** are formed from a single sheet of material. In other words, the base **11** and a plurality of protrusions **12** can be monolithically and integrally formed.

Also shown in Figure. 3, the plurality of protrusions **12** can be evenly spaced apart from one another and define grooves **13** located between adjacent protrusions **12.** Each protrusion of the plurality of protrusions **12** can have the same shape. Optionally, in some embodiments of the present invention, the shapes for each protrusion of the plurality of protrusions **12** can be different, and the protrusions **12** can also be unevenly spaced.

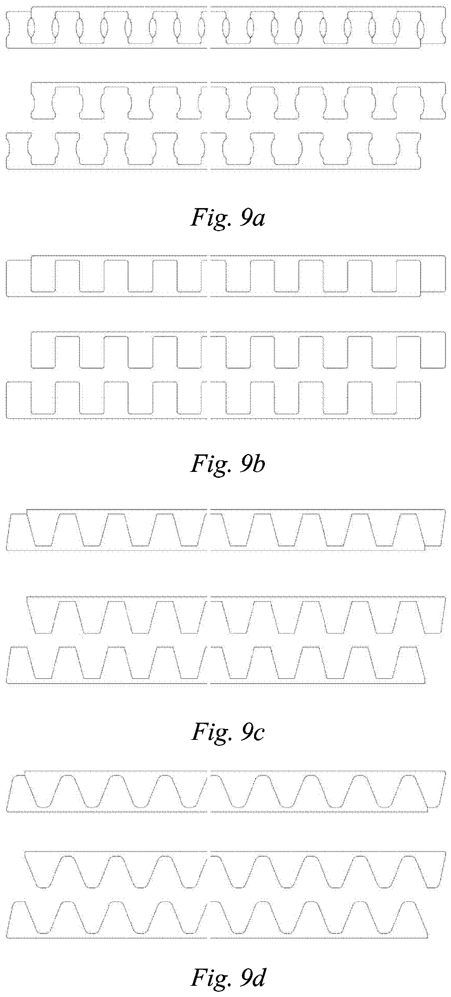

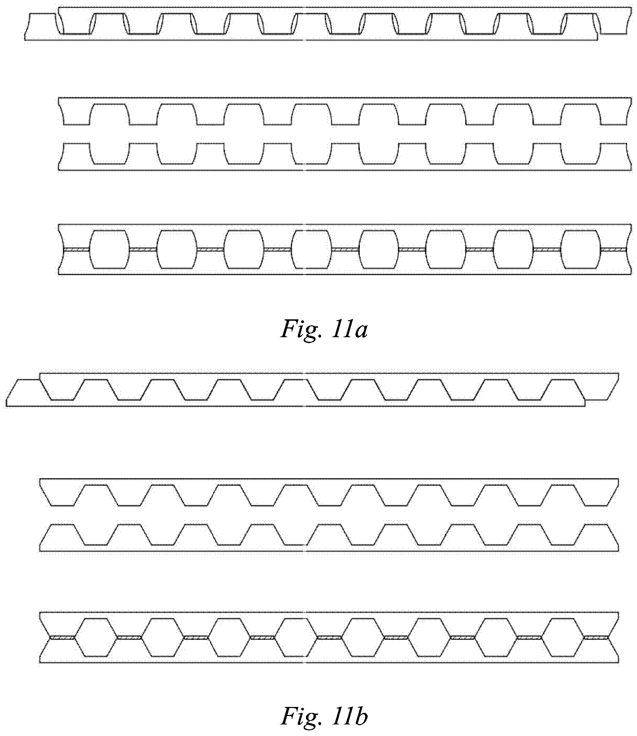

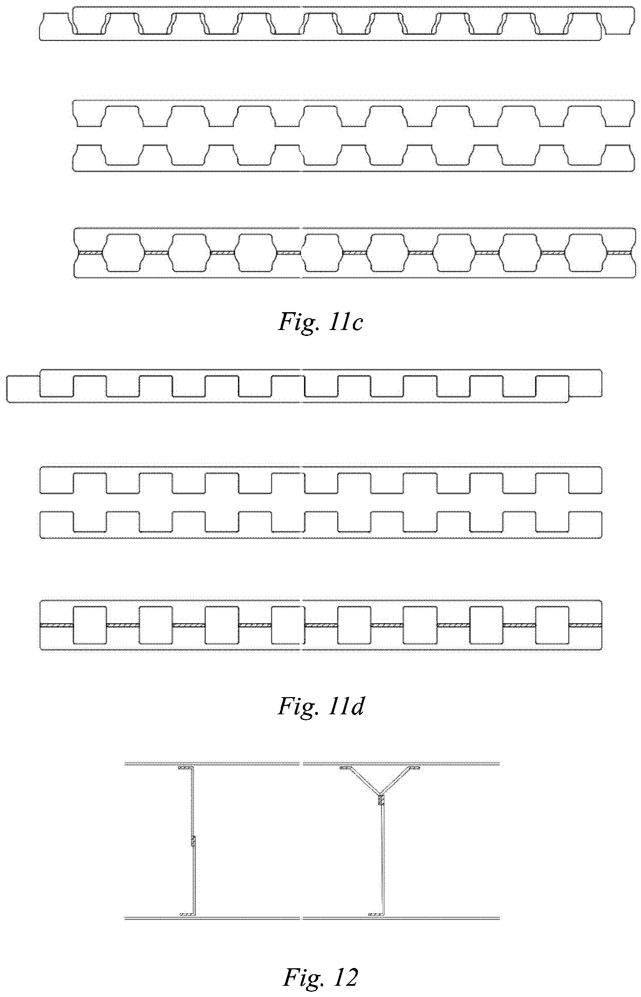

According to an embodiment of the present invention, each protrusion **12** of the plurality of protrusions **12** can have a generally hourglass shape. The protrusions **12** extends between two ends with one end being adjacent to the base **11** while the other end is distal from the base **11.** Optionally, the protrusions **12** can have a tapered width, gradually expanding width, tapered and then gradually expanding width, gradually expanding and then tapered width, or a constant width from the one end adjacent to the base **11** toward the other end apart from the base **11.** In other words, the protrusions **12** can have various different and any desired shapes, such as but not limited to a rectangular shape (shown in Figures 9b and 11d), a square shape, a trapezoid shape (shown in Figures 9c and 11b), a wavy shape (shown in Figure 9d), a trapezoid shape with inwardly-recessed lateral sides (shown in Figure 11a), a trapezoid shape with outwardly-raised lateral sides (shown in Figure 11c), or an hourglass shape (shown in Figure 9a). According to an embodiment of the present invention, and as shown in Figure 3, each protrusion of the plurality of protrusions 12 can include a pair of arcuate shaped lateral sides **14** to establish the hourglass shape.

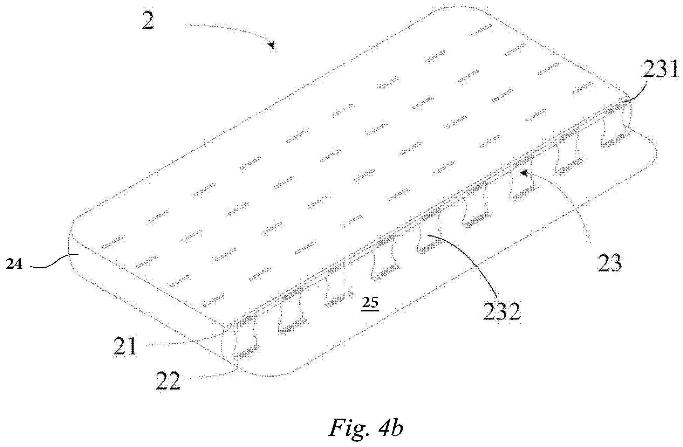

Figures 4a and 4b shows an inflatable product **2** including a tensioning member **23** constructed according to an embodiment of the present invention. As shown in Figures 4a and 4b, a first inflatable mattress **2** comprises a first wall **21,** a second wall **22,** and a sidewall **24.** The first wall **21** and the second wall **22** are arranged opposite one another. The sidewall **24** couples to the first wall **21** and the second wall **22** and extends about a periphery of the first wall **21** and a periphery of the second wall **22.** An inflatable chamber **25** is defined by the first wall **21,** the second wall **22,** and the sidewall **24.** The first inflatable mattress **2** also comprises a plurality of tensioning members **23** located in the inflatable chamber **25.** The tensioning members **23** comprises a base **231** and a plurality of protrusions **232.** The base **231** and the plurality of protrusions **232** are integrally provided, i.e. formed from a single sheet of material. It should be understood by one of ordinary skill in the art that the plurality of protrusions provided integrally can be also formed integrally from multiple sheets of material. At least some protrusions of the plurality of protrusions **232** extend from the base **231** in a same direction and are spaced apart from one another. The base **231** of the tensioning members **23** couples to the first wall **21,** and an end of each protrusion of the plurality of protrusions **232** of the tensioning members **23** couples to the second wall **22.** As illustrated in Figure 4a, the base **231** of the tensioning member **23** is entirely coupled to the first wall **21.** According to another embodiment of the present invention and as illustrated in Figure 4b, the base **231** of the tensioning member **23** may be only partially coupled to the first wall **21.** The difference in connection modes in Figures 4a and 4b allows for different appearance of the inflatable mattress, particularly when inflated.

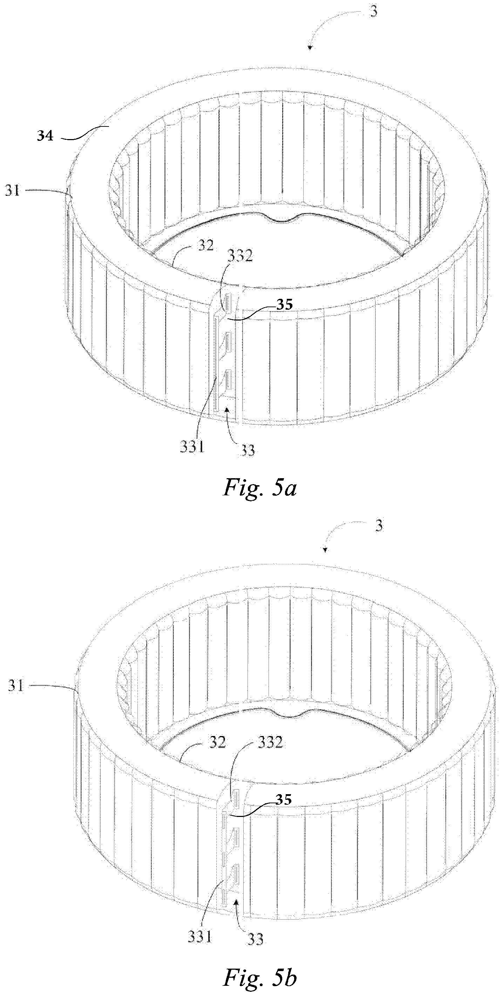

Figures 5a and 5b illustrate an inflatable product constructed according to an embodiment of the present invention. As shown in Figures 5a and 5b, the inflatable product is an inflatable pool/spa **3.** The inflatable pool/spa **3** comprises a first wall **31,** a second wall **32,** and a sidewall **34.** The first wall **31** and the second wall **32** are arranged in a concentric relationship and located opposite of one another. A sidewall **34** extends between the first wall **31** and the second wall **32** to couple the first wall **31** to the second wall **32.** The first wall **31,** the second wall **32,** and the sidewall **34** define an inflatable chamber **35** extending therebetween The inflatable pool/spa **3** also comprises a plurality of tensioning members **33** located in the inflatable chamber **35.** The tensioning members **33** comprises a base **331** and a plurality of protrusions **332.** The base **331** and the plurality of protrusions **332** are integrally provided, i.e. formed from a single sheet of material. It should be understood by one of ordinary skill in the art that the plurality of protrusions provided integrally can be also formed integrally from multiple sheets of material. At least some protrusions of the plurality of protrusions **332** extend from the base **331** in a same direction and are spaced apart from one another. The base **331** of the tensioning member **33** couples to the first wall **31,** and an end of each protrusion of the plurality of protrusions **332** of the tensioning members **33** couples to the second wall **32.** As illustrated in Figure 5a, the base **331** of the tensioning member **33** is entirely coupled to the first wall **31.** According an embodiment of the present invention and as best illustrated in Figure 5b, the base 331 of the tensioning members **33** may be only partially coupled to the first wall **31.** The difference in the connection modes in Figures 5a and 5b allows for different appearance of the inflatable pool/spa **3,** particularly when inflated.

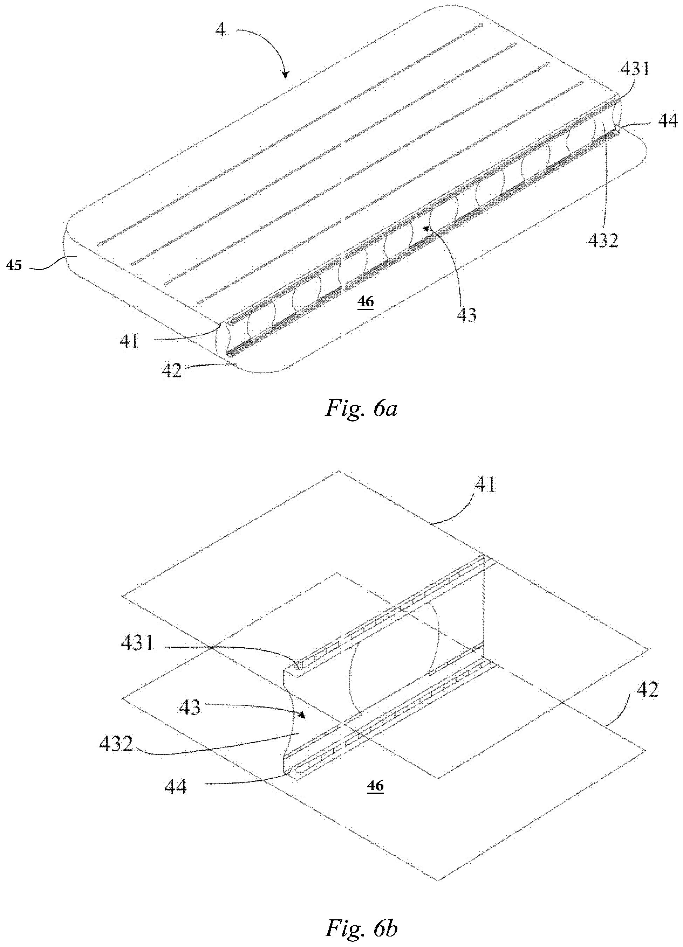

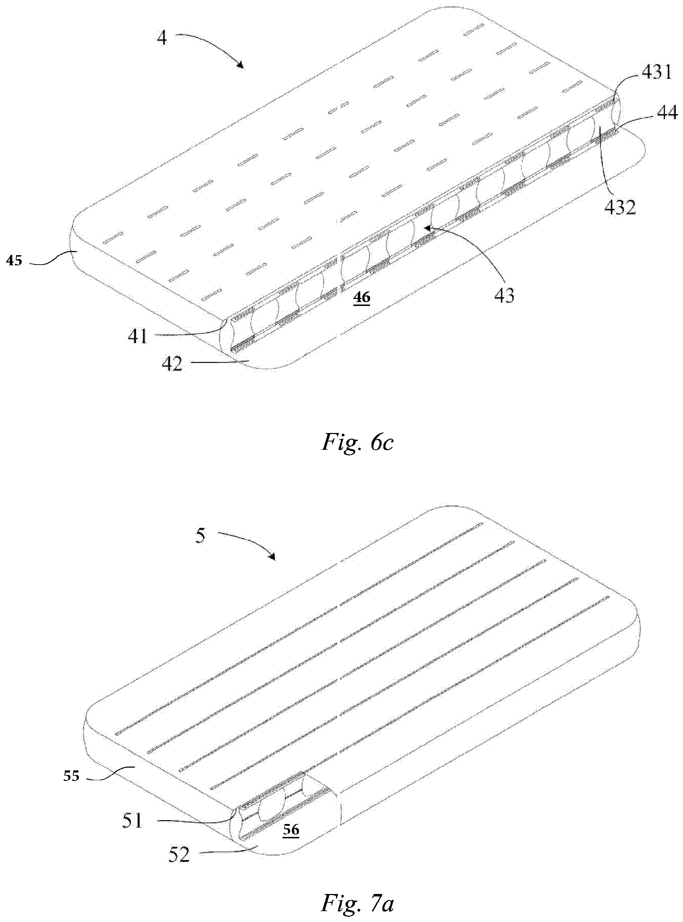

Figures 6a and 6c illustrate an inflatable product constructed according to an embodiment of the present invention. Figure 6b is a partial enlarged view of the inflatable product shown in Figure 6a. As shown in Figures 6a and 6b, a second inflatable mattress **4** comprises a first wall **41,** a second wall **42,** and a sidewall **45.** The first wall **41** and the second wall **42** are arranged opposite one another. The sidewall **45** couples to the first wall **41** and the second wall **42** and extends about a periphery of the first wall **41** and a periphery of the second wall **42.** An inflatable chamber **46** is defined by the first wall **41,** the second wall **42,** and the sidewall **45.** The second inflatable mattress **4** also comprises a plurality of tensioning members **43** located in the inflatable chamber **46.** The tensioning members **43** comprises a base **431** and a plurality of protrusions **432.** The base **431** and the plurality of protrusions **432** are integrally provided, i.e. formed from a single sheet of material. It should be understood by one of ordinary skill in the art that the plurality of protrusions provided integrally can be also formed integrally from multiple sheets of material. At least some protrusions of the plurality of protrusions **432** extend from the base **431** in a same direction and are spaced apart from one another. The base **431** of the tensioning members **43** couples to the first wall **41,** and an end of each protrusion of the plurality of protrusions **432** of the tensioning members **43** couples to the second wall **42** via a connector **44.** The connector **44** may be made of the same material as the tensioning members **43.** The connector **44** may be made of any material capable of being coupled to both the tensioning member **43** and and the first wall **41** and the second wall **42,** such as but not limited to PVC, TPR, EVA or other composite materials. As shown in Figures 6a and 6b, the base **431** of the tensioning member **43** is entirely coupled the first wall **41.** According to another embodiment of the present invention and as illustrated in Figure 6c, the base **431** of the tensioning member **43** may be partially coupled to the first wall **41.** Optionally, the connector **44** can be wholly or partially coupled to the second wall **42.** In this arrangement, the connector **44** provides a reinforcing effect and can facilitate the mounting of the tensioning member **43** to the second inflatable mattress **4.**

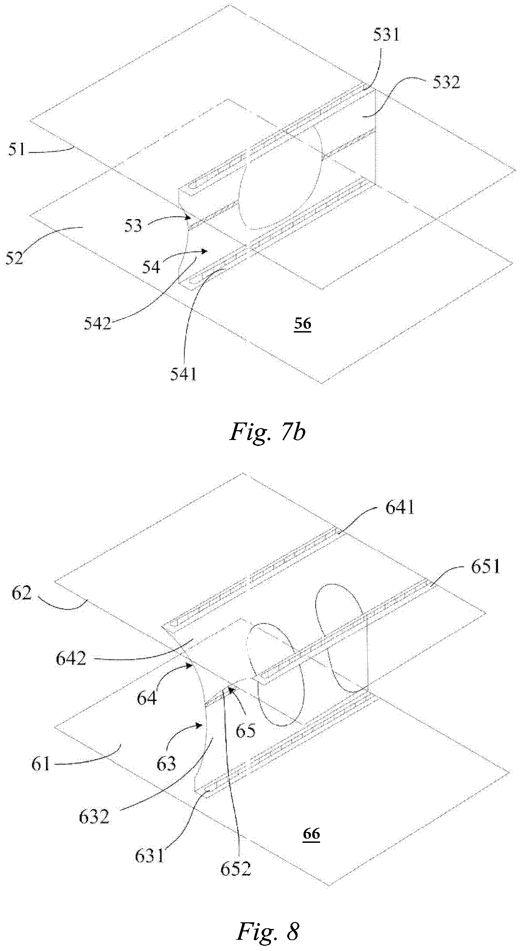

Figure 7a illustrates an inflatable product constructed according to an embodiment of the present invention. Figure 7b is a partial enlarged view of Figure 7a. As illustrated in Figures 7a and 7b, a third inflatable mattress **5** comprises a first wall **51,** a second wall **52,** and a sidewall **55.** The first wall **51,** the second wall **52** are arranged opposite one another. The sidewall **55** couples to the first wall **51** and the second wall **52** and extends about a periphery of the first wall **51** and a periphery of the second wall **52.** An inflatable chamber **56** is defined by the first wall **51,** the second wall **52,** and the sidewall **55.** The third inflatable mattress **5** also comprises a plurality of tensioning members **53, 54** located in the inflatable chamber **56.** The plurality of tensioning members **53, 54** includes a first tensioning member **53** and a second tensioning member **54.** The first tensioning member **53** comprises a base **531** and a plurality of protrusions **532.** The base **531** and the plurality of protrusions **532** are integrally provided, i.e. formed from a single sheet of material. It should be understood by one of ordinary skill in the art that the plurality of protrusions provided integrally can be also formed integrally from multiple sheets of material. At least some protrusions of the plurality of protrusions **532** extend from the base **531** in a same direction and are spaced apart from one another. The second tensioning member **54** comprises a base **541** and a plurality of protrusions **542.** The base **541** and the plurality of protrusions **542** are integrally provided, i.e. formed from a single sheet of material. It should be understood by one of ordinary skill in the art that the plurality of protrusions provided integrally can be also formed integrally from multiple sheets of material. At least some protrusions of the plurality of protrusions **542** extend from the base **541** in a same direction and are spaced apart from one another.

According to an embodiment of the present invention, the base **531** of the first tensioning member **53** couples to the first wall **51.** The base **541** of the second tensioning member **54** couples to the second wall **52.** Ends of each protrusion of the plurality of protrusions **532** of the first tensioning members **53** couple to ends of each protrusion of the plurality of protrusions **542** of the second tensioning member **54** to form an integrated tensioning member to provide structural support to the third inflatable mattress **5.** As shown in Figures 7a and 7b, the base **531** of the first tensioning member **53** is entirely coupled to the first wall **51** and the base **541** of the second tensioning member **54** is entirely coupled to the second wall **52.** Although not shown, according to another embodiment of the present invention, the base **531** of the first tensioning member **53** may be partially coupled to the first wall **51,** and the base **541** of the second tensioning member **54** may be partially coupled to the second wall **52.** In this arrangement, the plurality of protrusions **532** of the first tensioning member **53** are sequentially coupled to the plurality of protrusions **542** of the second tensioning member **54** to form an integrated tensioning member with complete upper and lower edges such that the material for manufacturing the first and second tensioning members **53, 54** can be effectively utilized, and at the same time, the inflatable product using the integrated tensioning member is provided with a flat exterior surface. In this embodiment, since the height of the first and second tensioning members **53, 54** is approximately half of the entire height of the integrated tensioning member, the height of the protrusions **532, 542** of the first and second tensioning members **53, 54** can be reduced. In this way, during the manufacturing process, accidental folding or deformation of the protrusions **532, 542** of the first and second tensioning members **53, 54** can be avoided, thereby reducing product defects.

Figure 8 is an enlarged partial view of an inflatable product including a tensioning member constructed in accordance with an embodiment of the present invention. The inflatable product is similar to the inflatable product illustrated in Figures 4a-5b which includes but is not limited to an inflatable mattress and/or an inflatable pool/spa. As shown in Figure 8, the inflatable product comprises a first wall **61,** a second wall **62,** and a sidewall (not shown). The first wall **61** and the second wall **62** are arranged opposite one another. The sidewall (not shown) couples to the first wall **61** and the second wall **62** and extends about a periphery of the first wall **61** and a periphery of the second wall **62.** An inflatable chamber **66** is defined by the first wall **61,** the second wall **62,** and the sidewall (not shown). The inflatable product also comprises a plurality of tensioning members **63, 64, 65** located in the inflatable chamber **66.** The plurality of tensioning members **63, 64, 65** includes a first tensioning member **63,** a second tensioning member **64,** and a third tensioning member **65.**

The first tensioning member **63** comprises a base **631** and a plurality of protrusions **632.** The base **631** and the plurality of protrusions **632** are integrally provided, i.e. formed from a single sheet of material. It should be understood by one of ordinary skill in the art that the plurality of protrusions provided integrally can be also formed integrally from multiple sheets of material. At least some protrusions of the plurality of protrusions **632** extend from the base **631** in a same direction and are spaced apart from one another. Each protrusion of the plurality of protrusions **632** of the first tensioning member **63** has a height extending between the base **631** and a distal end of the protrusion **632** spaced from the base **631.**

The second tensioning member **64** comprises a base **641** and a plurality of protrusions **642.** The base **641** and the plurality of protrusions **642** are integrally provided, i.e. formed from a single sheet of material. It should be understood by one of ordinary skill in the art that the plurality of protrusions provided integrally can be also formed integrally from multiple sheets of material. At least some protrusions of the plurality of protrusions **642** extend from the base **641** in a same direction and are spaced apart from one another. Each protrusion of the plurality of protrusions **642** of the second tensioning member **64** has a height extending between the base **641** and a distal end of the protrusion **642** spaced from the base **641.**

The third tensioning member **65** comprises a base **651** and a plurality of protrusions **652.** The base **651** and the plurality of protrusions **652** are integrally provided, i.e. formed from a single sheet of material. It should be understood by one of ordinary skill in the art that the plurality of protrusions provided integrally can be also formed integrally from multiple sheets of material. At least some protrusions of the plurality of protrusions **652** extend from the base **651** in a same direction and are spaced apart from one another. Each protrusion of the plurality of protrusions **652** of the second tensioning member **65** has a height extending between the base **651** and a distal end of the protrusion **652** spaced from the base **651.**

The base **631** of the first tensioning member **63** couples to the first wall **61.** The base **641** of the second tensioning member **64** couples to the second wall **62.** The base **651** of the third tensioning member **65** couples to the second wall **62** and spaced apart from the base **641** of the second tensioning member **64.** Each protrusion of the plurality of protrusions **632** of the first tensioning member **63** couples to each protrusion of the plurality of protrusions **642** of the second tensioning member **64.** Each protrusion of the plurality of protrusions **652** of the third tensioning member **65** couples to each protrusion of the plurality of protrusions **632** of the first tensioning member **65** and each protrusion of the plurality of protrusions **642** of the second tensioning member **64.**

As illustrated in Figure 8, the base **631** of the first tensioning member **63** is entirely coupled to the first wall **61.** Additionally, the base **641** of the second tensioning member **64** and the base **651** of the third tensioning member **65** are also entirely coupled to the second wall **62.** Although not illustrated, the base **631** of the first tensioning member **63** can be partially coupled to the first wall **61,** and the base **641** of the second tensioning member **64** and the base **651** of the third tension tensioning member **65** may be partially coupled to the second wall **62.** In other words, as illustrated in Figure 8, the first tensioning member **63,** the second tensioning member **64,** and the third tensioning member **65** are coupled to one another to establish a Y-shaped tensioning member.

In this arrangement, the height of the first tensioning member **63** is greater than the heights of the second tensioning member **64** and the third tensioning member **65.** Optionally, according to another embodiment of the present invention, the heights of the first tensioning member **63,** the second tensioning member **64** and the third tensioning member **65** can be set differently to any desired heights. For example, the tensioning member can be formed by assembling the first tensioning member **63,** the second tensioning member **64** and the third tensioning member **65** at different locations (e.g., intermediate parts, corner parts, and edge parts) of different inflatable products.

It should be appreciated that the connection between the tensioning member and the first wall and/or between the tensioning members and the plurality of protrusions is high-frequency welding or adhesive bonding.

In the above exemplary embodiments, several types of tensioning members are shown using inflatable mattresses and inflatable pool/spa as examples. It will be understood that these technical solutions of the tensioning members can also be applied to other suitable inflatable products such as but not limited to inflatable water sports products. The tensioning members in the above embodiments may comprise: 1) a single tensioning member having a base and a plurality of protrusions, 2) a connector and a tensioning member having a base and a plurality of protrusions, 3) a pair of tensioning members each having a base and a plurality of protrusions, or 4) a plurality of three tensioning members each having a base and a plurality of protrusions. The protrusion of the tensioning members may be coupled, at a position other than the end, to the chamber wall or another tensioning members when necessary. In addition, the tensioning members may comprise any desired number of tensioning members each having a base and a plurality of protrusions according to different requirements. The inflatable products can also incorporate a variety of different types of tensioning members based on requirements.

It is another aspect of the present invention to provide a method for manufacturing an inflatable product and a method for manufacturing a tensioning member for an inflatable product. The method for manufacturing an inflatable product can include the method of manufacturing the tensioning member for an inflatable product. In other words, the methods for manufacturing the inflatable product can include the method for manufacturing the tensioning member for the inflatable product.

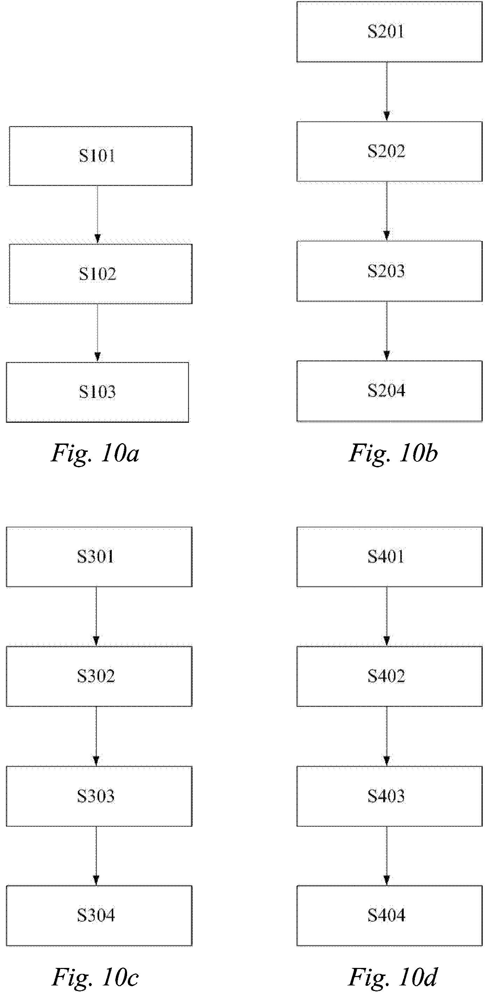

Figure 10a illustrates a flowchart of a method for manufacturing an inflatable product according to an embodiment of the present invention. The inflatable product has a first wall, a second wall, and a side wall. The method comprises the following steps:
Step S101: providing a sheet;
Step S102: cutting the sheet to form at least two tensioning members; wherein each tensioning member of the at least two tensioning members comprises a base and a plurality of protrusions; wherein the base and the plurality of protrusions are formed from a single sheet of material; wherein each protrusion of the plurality of protrusions extends from the base in a same direction and are spaced apart from one another; and
Step S103: joining the at least two tensioning members to the inflatable product.

According to an embodiment of the present invention, the step of joining (Step S103) comprises coupling the base of each tensioning member of the at least two tensioning members to the first wall and coupling each protrusion of the plurality of protrusions of each tensioning member of the at least two tensioning members to the second wall.

According to the above steps, optionally, as shown in Figures 9a to 9d, the entire sheet of tensioning member material can be used to manufacture two identical tensioning members. The tensioning member **1,** as shown in Figure 3, comprises a base **11** and a plurality of protrusions **12.** The plurality of protrusions **12** are coupled to the base **11** wherein each protrusion of the plurality of protrusions **12** extends from the base **11** in a same direction and are spaced apart from one another. The protrusions of the tensioning member shown in Figure 9a have the same shape as the tensioning member **1** in Figure 3. In addition, the shape of the protrusion of the tensioning member formed by cutting can also have a rectangular shape as exemplarily shown in Figure 9b, a trapezoid shape as exemplarily shown in Figure 9c, and a wavy shape as exemplarily shown in Figure 9d. Optionally, the protrusion of the tensioning member may have the shape illustrate in Figs. 11a to 11d or any other desired shape.

Figure 10b illustrates a flowchart of a method for manufacturing an inflatable product according to an embodiment of the present invention. The inflatable product has a first wall, a second wall, and a side wall. The method comprises the following steps:
Step S201: providing a sheet;
Step S202: cutting the sheet to form at least two tensioning members; wherein each tensioning member of the at least two tensioning members comprises a base and a plurality of protrusions; wherein the base and the plurality of protrusions are formed from a single sheet of material; wherein each protrusion of the plurality of protrusions extends from the base in a same direction and are spaced apart from one another;
Step S203: providing a connector; and
Step S204: joining the at least two tensioning members to the inflatable product.

According to an embodiment of the present invention, the step of joining (Step S204) comprises coupling the base of each tensioning member of the at least two tensioning members to the first wall and coupling each protrusion of the plurality of protrusions of each tensioning member of the at least two tensioning members to the second wall using the connector.

It should be note that, in this exemplary embodiment, depending on the requirements of the user, the protrusions of the tensioning members can have various different shapes, such as but not limited to the shapes shown in Figures 9a to 9d and Figures 11a to 11d. Optionally, the connector can be an elongated connector for coupling each protrusion of the plurality of protrusions of each tensioning member of the at least two tensioning members to the inflatable product. In this arrangement, the tensioning members manufactured from the method may be similar to the tensioning members shown in Figures 6a to 6c.

Figure 10c illustrates a flowchart of a method for manufacturing an inflatable product according to an embodiment of the present invention. The inflatable product has a first wall, a second wall, and a side wall. The method comprises the following steps:
Step S301: providing a sheet;
Step S302: cutting the sheet to form at least two tensioning members; wherein each tensioning member of the at least two tensioning members comprises a base and a plurality of protrusions; wherein the base and the plurality of protrusions are formed from a single sheet of material; wherein each protrusion of the plurality of protrusions extends from the base in a same direction and are spaced apart from one another;
Step S303: joining the at least two tensioning members by coupling an end of the each protrusion of one of the at least two tensioning members to an end of the each protrusion of the other tensioning member of the at least two tensioning members; and
Step S304: joining the at least two tensioning members to the inflatable product.

According to an embodiment of the present invention, the step of joining the at least two tensioning members to the inflatable product (Step S304) comprises coupling the base of one tensioning member of the at least two tensioning members to the first wall and coupling the base of the other tensioning member of the at least two tensioning members to the second wall.

As shown in Figures 11a to 11d, the entire sheet of tensioning member material can be used to manufacture two identical tensioning members. The tensioning member **1,** as shown in Figure 3, comprises a base **11** and a plurality of protrusions **12.** The plurality of protrusions **12** are coupled to the base **11** wherein each protrusion of the plurality of protrusions **12** extends from the base **11** in a same direction and are spaced apart from one another. As can be seen from Figures 11a to 11d, the shape of the protrusions of the tensioning member can be a trapezoid with inwardly-recessed lateral sides, as shown in Figure 11a or a trapezoid with outwardly-raised lateral sides, as shown in Figure 11c. As illustrated in Figures 11a to 11d, the tensioning members are connected in a staggered manner such that an end of the protrusion of one tensioning member that is remote from the base is coupled to an end of the protrusion of the other tensioning member that is remote from the base to form an integrated tensioning member with complete upper and lower edges.

In this arrangement, the tensioning member obtained from the method may be similar to the tensioning members shown in Figures 7a and 7b.

Figure 10d illustrates a flowchart of a method for manufacturing an inflatable product according to an embodiment of the present invention. The inflatable product has a first wall, a second wall, and a side wall. The method comprises the following steps:
Step S401: providing a sheet;
Step S402: cutting the sheet to form at least two tensioning members; wherein each tensioning member of the at least two tensioning members comprises a base and a plurality of protrusions; wherein the base and the plurality of protrusions are formed from a single sheet of material; wherein each protrusion of the plurality of protrusions extends from the base in a same direction and are spaced apart from one another; wherein the at least two tensioning members includes a plurality of three tensioning members,
Step S403: joining the plurality of three tensioning members by coupling an end of each protrusion of each tensioning member of the plurality of three tensioning members to one another; and
Step S404: joining the at least two tensioning members to the inflatable product.

According to an embodiment of the present invention, the step of joining the at least two tensioning members to the inflatable product (Step S404) comprises coupling the base of the first tensioning member to the first wall, coupling the base of the second tensioning member to the second wall, and coupling the base of the third tensioning member to the second wall. It should be appreciated that the plurality of three tensioning members may have different heights and every three tensioning members are coupled to one another and form a Y-shaped tensioning member. Optionally, a tensioning member in the Y-shaped tensioning member that is generally perpendicular to the first wall and the second can have a height that is greater than that of the other tensioning members. In this arrangement, the tensioning member obtained from the method may be similar to the tensioning members shown in Figure 8.

Additionally, it should be noted that processes such as blanking, die cutting, or thermal cutting can be used to cut a sheet and form the tensioning members. More specifically, according to an embodiment of the present invention, blanking, die cutting, or thermal cutting can be carried out in a way such that a pair of tensioning members can be obtained. Optionally, the entire sheet may be blanked out or thermally cut in an assembly line, and the entire sheet may be previously formed with a sheet shape suitable for blanking or cutting to form at least one pair of tensioning members.

In all the above methods for manufacturing the inflatable product, the connection between the tensioning member and the inflatable product, and the connection between the tensioning members can be formed via high-frequency welding or adhesive bonding. The base of the tensioning member may be wholly or partially coupled to the first wall or the second wall of the inflatable product. Additionally, a connector may be used to couple the tensioning member to the first wall or the second wall of the inflatable product. Similarly, the connector may be wholly or partially coupled to the first wall or the second wall of the inflatable product.

According to an embodiment of the present invention and as best illustrated in Figure 12, the tensioning member obtained by the above manufacturing methods can form either a straight tensioning member or a Y-shaped tensioning member. It should be appreciated that the sheet can be a single-layer material such as polyvinyl chloride ("PVC"), Thermal plastic Rubber ("TPR"), Ethylene-vinyl Actetate ("EVA") or cloth, or a multilayer material including a fabric material interposed between two adhesion layers, i.e. a fabric material being located between a pair of PVC, TPR, EVA, or cloth sheets.

In comparison with the prior art, the present invention provides a maximum utilization of material used to manufacture tensioning members. Additionally, the tensioning members formed by the present invention can be used either alone or in combination thereby reducing the total weight of the inflatable product while maximizing the utilization of resources.

The technical content and features of the present invention are disclosed herein, but it will be understood by those skilled in the art that one may make various variations and improvements to the concepts disclosed herein under the scope of the present invention, and all the variations and improvements would fall into the scope of the present invention. The descriptions of the embodiments herein are illustrative and not restrictive, and therefore, the scope of the present invention is defined by the claims.

## Claims

1. An inflatable product, comprising:
a first wall (21, 31, 41, 51, 61);
a second wall (22, 32, 42, 52, 62);
a sidewall (24, 34, 45, 55);
an inflatable chamber (25, 35, 46, 56, 66) defined by said first wall, said second wall, and said sidewall; and
a first tensioning member (53, 63) located in said inflatable chamber and comprising a first base (531, 631) coupled to said first wall and a plurality of first protrusions extending from the first base in a same direction and are spaced apart from one another, each said first protrusion having a first end away from said first wall;
and a second tensioning member (54, 64) located in said inflatable chamber and comprising a second base (541, 641) coupled to said second wall and a plurality of second protrusions extending from the second base in a same direction and are spaced apart from one another, each said second protrusion having a second end away from said second wall;
wherein said first end of each said first protrusion of said first tensioning member is coupled to a corresponding second end of each of said plurality of second protrusions of said second tensioning member to form an integrated tensioning member to provide structural support to the inflatable product.

2. The inflatable product according to claim 1, wherein,
said plurality of first protrusions are evenly spaced apart from one another and define first grooves located between adjacent two first protrusions; and
said plurality of second protrusions are evenly spaced apart from one another and define second grooves located between adjacent two second protrusions.

3. The inflatable product according to the previous claim, comprising a third tensioning member (65), according to claim 1, located in said inflatable chamber; wherein said base (651) of said third tensioning member (65) couples to said second wall; and
wherein each protrusion of said plurality of protrusions of said third tensioning member (65) having a third end away from said second wall which couples to a respective first end of each protrusion of said plurality of protrusions of said first tensioning member and to a respective second end of each protrusion of said plurality of protrusions of said second tensioning member (541, 641).

4. The inflatable product according to claim 3, wherein a height of said plurality of protrusions of said first tensioning member (531, 631) is greater than a height of said plurality of protrusions of said second tensioning member (541, 641) and said third tensioning member (65).

5. The inflatable product according to claim 1, wherein said base and said plurality of protrusions of the first and second tensioning members are formed from a single sheet of material.

6. A method for manufacturing a tensioning member for an inflatable product, the method comprising:
providing a sheet; and
cutting the sheet to form at least two tensioning members, a first tensioning member and a second tensioning member;
wherein each first and second tensioning member comprises a base and a plurality of protrusions;
wherein the base and the plurality of protrusions are formed from a single sheet of material; and
wherein each protrusion of the plurality of protrusions of the first tensioning member extends from the base in a same direction and are spaced apart from one another and each protrusion of the plurality of protrusions of the second tensioning member extends from the base in a same direction and are spaced apart from one another;
wherein the method further includes joining the first tensioning member to the second tensioning member; wherein said joining comprises coupling an end of each protrusion of the first tensioning member to an end of each protrusion of the second tensioning member.

7. The method according to the preceding claim, further including providing a connector, wherein the connector is coupled to each protrusion of the plurality of protrusions.

8. The method according to claim 6, wherein the at least two tensioning members include a plurality of three tensioning members, and the method further includes joining the plurality of three tensioning members; wherein joining comprises coupling an end of each protrusion of each tensioning member of the plurality of three tensioning members to one another.

9. A method for manufacturing an inflatable product, wherein the inflatable product has a first wall, a second wall, and a sidewall, the method comprising:
providing a sheet;
cutting the sheet to form at least two tensioning members, a first tensioning member and a second tensioning member;
wherein each first and second tensioning member comprises a base and a plurality of protrusions;
wherein the base and the plurality of protrusions are formed from a single sheet of material;
wherein each protrusion of the plurality of protrusions of the first tensioning member extends from the base in a same direction and are spaced apart from one another and each protrusion of the plurality of protrusions of the second tensioning member extends from the base in a same direction and are spaced apart from one another;
wherein the method further includes joining the first tensioning member to the second tensioning member by coupling an end of each protrusion of the first tensioning member to an end of each protrusion of the second tensioning member; and
joining the at least two tensioning members to said first wall and/or to said second wall of the inflatable product by coupling the base of the first tensioning member to the first wall and the base of the second tensioning member to the second wall.

10. The method according to the preceding claim further including providing a connector; wherein said joining comprises coupling the base of each tensioning member of the at least two tensioning members to the first wall and coupling each protrusion of the plurality of protrusions of each tensioning member of the at least two tensioning members to the second wall using the connector.

11. The method according to claim 9, wherein the at least two tensioning members includes a plurality of three tensioning members, and the method further includes:
joining the plurality of three tensioning members by coupling an end of each protrusion of each tensioning member of the plurality of three tensioning members to one another;
wherein said joining the at least two tensioning members to the inflatable product comprises coupling the base of the first tensioning member to the first wall, coupling the base of the second tensioning member to the second wall, and coupling the base of the third tensioning member to the second wall.

## Patentansprüche

1. Aufblasbares Produkt, umfassend:
eine erste Wand (21, 31, 41, 51, 61);
eine zweite Wand (22, 32, 42, 52, 62);
eine Seitenwand (24, 34, 45, 55);
eine durch die erste Wand, die zweite Wand und die Seitenwand definierte aufblasbare Kammer (25, 35, 46, 56, 66) , und
ein erstes Spannelement (53, 63), das in der aufblasbaren Kammer befindlich ist und eine mit der ersten Wand gekuppelte erste Basis (531, 631) und eine Vielzahl von ersten Fortsätzen umfasst, die sich von der ersten Basis in dieselbe Richtung erstrecken und voneinander beabstandet sind, wobei jeder erste Fortsatz ein von der ersten Wand entferntes erstes Ende aufweist;
und ein zweites Spannelement (54, 64), das in der aufblasbaren Kammer befindlich ist und eine mit der zweiten Wand gekuppelte zweite Basis (541, 641) und eine Vielzahl von zweiten Fortsätzen aufweist, die sich von der zweiten Basis in dieselbe Richtung erstrecken und voneinander beabstandet sind, wobei jeder zweite Fortsatz ein von der zweiten Wand entferntes zweites Ende aufweist,
wobei jedes erste Ende jedes ersten Fortsatzes des ersten Spannelements mit einem entsprechenden zweiten Ende eines jeden der Vielzahl von zweiten Fortsätzen des zweiten Spannelements gekoppelt ist, um ein integriertes Spannelement zu bilden, um eine strukturelle Stütze für das aufblasbare Produkt bereitzustellen.

2. Aufblasbares Produkt nach Anspruch 1, wobei
die Vielzahl von ersten Fortsätzen gleichmäßig voneinander beabstandet sind und erste Nuten definieren, die jeweils zwischen zwei benachbarten ersten Fortsätzen befindlich sind, und
die Vielzahl von zweiten Fortsätzen gleichmäßig voneinander beabstandet sind und zweite Nuten definieren, die jeweils zwischen zwei benachbarten zweiten Fortsätzen befindlich sind.

3. Aufblasbares Produkt nach dem vorhergehenden Anspruch, umfassend ein drittes Spannelement (65) nach Anspruch 1, das in der aufblasbaren Kammer befindlich ist, wobei die Basis (651) des dritten Spannelements (65) mit der zweiten Wand gekuppelt ist, und
wobei jeder Fortsatz der Vielzahl von Fortsätzen des dritten Spannelements (65) ein von der zweiten Wand entferntes drittes Ende aufweist, das mit einem jeweiligen ersten Ende jedes Fortsatzes der Vielzahl von Fortsätzen des ersten Spannelements und mit einem jeweiligen zweiten Ende jedes Fortsatzes der Vielzahl von Fortsätzen des zweiten Spannelements (541, 641) gekuppelt ist.

4. Aufblasbares Produkt nach Anspruch 3, wobei eine Höhe der Vielzahl von Fortsätzen des ersten Spannelements (531, 631) größer ist als eine Höhe der Vielzahl von Fortsätzen des zweiten Spannelements (541, 641) und des dritten Spannelements (65).

5. Aufblasbares Produkt nach Anspruch 1, wobei die Basis und die Vielzahl von Fortsätzen des ersten und zweiten Spannelements aus einer einzigen Materiallage gebildet sind.

6. Verfahren zur Herstellung eines Spannelements für ein aufblasbares Produkt, wobei das Verfahren Folgendes umfasst:
Bereitstellen einer Lage, und
Schneiden der Lage, um mindestens zwei Spannelemente, ein erstes Spannelement und ein zweites Spannelement, zu bilden,
wobei sowohl das erste als auch das zweite Spannelement eine Basis und eine Vielzahl von Fortsätzen umfassen,
wobei die Basis und die Vielzahl von Fortsätzen aus einer einzigen Materiallage gebildet sind, und
wobei sich sämtliche Fortsätze der Vielzahl von Fortsätzen des ersten Spannelements von der Basis in dieselbe Richtung erstrecken und voneinander beabstandet sind und sich sämtliche Fortsätze der Vielzahl von Fortsätzen des zweiten Spannelements von der Basis in dieselbe Richtung erstrecken und voneinander beabstandet sind,
wobei das Verfahren ferner das Zusammenfügen des ersten Spannelements mit dem zweiten Spannelement beinhaltet,
wobei dieses Zusammenfügen das Kuppeln eines Endes eines jeden Fortsatzes des ersten Spannelements mit einem Ende eines jeden Fortsatzes des zweiten Spannelements umfasst.

7. Verfahren nach dem vorhergehenden Anspruch, ferner umfassend das Bereitstellen eines Verbinders, wobei der Verbinder mit jedem Fortsatz der Vielzahl von Fortsätzen gekuppelt ist.

8. Verfahren nach Anspruch 6, wobei die mindestens zwei Spannelemente eine Vielzahl von drei Spannelementen beinhalten und das Verfahren ferner das Zusammenfügen der Vielzahl von drei Spannelementen beinhaltet, wobei das Zusammenfügen das Kuppeln eines Endes eines jeden Fortsatzes eines jeden Spannelements der Vielzahl von drei Spannelementen miteinander umfasst.

9. Verfahren zur Herstellung eines aufblasbaren Produkts, wobei das aufblasbare Produkt eine erste Wand, eine zweite Wand und eine Seitenwand aufweist und das Verfahren Folgendes umfasst:
Bereitstellen einer Lage;
Schneiden der Lage, um mindestens zwei Spannelemente, ein erstes Spannelement und ein zweites Spannelement, zu bilden,
wobei sowohl das erste als auch das zweite Spannelement eine Basis und eine Vielzahl von Fortsätzen umfassen,
wobei die Basis und die Vielzahl von Fortsätzen aus einer einzigen Materiallage gebildet sind,
wobei sich sämtliche Fortsätze der Vielzahl von Fortsätzen des ersten Spannelements von der Basis in dieselbe Richtung erstrecken und voneinander beabstandet sind und sich sämtliche Fortsätze der Vielzahl von Fortsätzen des zweiten Spannelements von der Basis in dieselbe Richtung erstrecken und voneinander beabstandet sind,
wobei das Verfahren ferner das Zusammenfügen des ersten Spannelements mit dem zweiten Spannelement durch Kuppeln eines Endes eines jeden Fortsatzes des ersten Spannelements mit einem Ende eines jeden Fortsatzes des zweiten Spannelements beinhaltet, und
Zusammenfügen der mindestens zwei Spannelemente mit der ersten Wand und/oder mit der zweiten Wand des aufblasbaren Produkts durch Kuppeln der Basis des ersten Spannelements mit der ersten Wand und der Basis des zweiten Spannelements mit der zweiten Wand.

10. Verfahren nach dem vorhergehenden Anspruch, beinhaltend ferner das Bereitstellen eines Verbinders, wobei das Zusammenfügen das Kuppeln der Basis jedes Spannelements der mindestens zwei Spannelemente mit der ersten Wand und das Kuppeln jedes Fortsatzes der Vielzahl von Fortsätzen jedes Spannelements der mindestens zwei Spannelemente mit der zweiten Wand unter Nutzung des Verbinders umfasst.

11. Verfahren nach Anspruch 9, wobei die mindestens zwei Spannelemente eine Vielzahl von drei Spannelementen beinhalten und das Verfahren ferner Folgendes beinhaltet:
Zusammenfügen der Vielzahl von drei Spannelementen durch Kuppeln eines Endes jedes Fortsatzes jedes Spannelements der Vielzahl von drei Spannelementen miteinander,
wobei das Zusammenfügen der mindestens zwei Spannelemente mit dem aufblasbaren Produkt das Kuppeln der Basis des ersten Spannelements mit der ersten Wand, das Kuppeln der Basis des zweiten Spannelements mit der zweiten Wand und das Kuppeln der Basis des dritten Spannelements mit der zweiten Wand umfasst.

## Revendications

1. Produit gonflable, comprenant :
une première paroi (21, 31, 41, 51, 61) ;
une seconde paroi (22, 32, 42, 52, 62) ;
une paroi latérale (24, 34, 45, 55) ;
une chambre gonflable (25, 35, 46, 56, 66) définie par ladite première paroi, ladite seconde paroi et ladite paroi latérale ; et
un premier élément de tension (53, 63) situé dans ladite chambre gonflable et comprenant une première base (531, 631) couplée à ladite première paroi et une pluralité de premières saillies s'étendant à partir de la première base dans une même direction et espacées les unes des autres, chacune desdites premières saillies ayant une première extrémité éloignée de ladite première paroi ;
et un deuxième élément de tension (54, 64) situé dans ladite chambre gonflable et comprenant une seconde base (541, 641) couplée à ladite seconde paroi et une pluralité de secondes saillies s'étendant à partir de la seconde base dans une même direction et espacées les unes des autres, chacune desdites secondes saillies ayant une seconde extrémité éloignée de ladite seconde paroi ;
dans lequel ladite première extrémité de chacune desdites premières saillies dudit premier élément de tension est couplée à une seconde extrémité correspondante de chacune de ladite pluralité de secondes saillies dudit deuxième élément de tension afin de former un élément de tension intégré pour fournir un support structurel au produit gonflable.

2. Produit gonflable selon la revendication 1, dans lequel
ladite pluralité de premières saillies sont régulièrement espacées les unes des autres et définissent des premières rainures situées entre deux premières saillies adjacentes ; et
ladite pluralité de secondes saillies sont régulièrement espacées les unes des autres et définissent des secondes rainures situées entre deux secondes saillies adjacentes.

3. Produit gonflable selon la revendication précédente, comprenant un troisième élément de tension (65), selon la revendication 1, situé dans ladite chambre gonflable ; dans lequel ladite base (651) dudit troisième élément de tension (65) se couple à ladite seconde paroi ; et
dans lequel chaque saillie de ladite pluralité de saillies dudit troisième élément de tension (65) comporte une troisième extrémité éloignée de ladite seconde paroi qui se couple à une première extrémité respective de chaque saillie de ladite pluralité de saillies dudit premier élément de tension et à une seconde extrémité respective de chaque saillie de ladite pluralité de saillies dudit deuxième élément de tension (541, 641).

4. Produit gonflable selon la revendication 3, dans lequel une hauteur de ladite pluralité de saillies dudit premier élément de tension (531, 631) est supérieure à une hauteur de ladite pluralité de saillies dudit deuxième élément de tension (541, 641) et dudit troisième élément de tension (65).

5. Produit gonflable selon la revendication 1, dans lequel ladite base et ladite pluralité de saillies des premier et second éléments de tension sont formées à partir d'une seule feuille de matériau.

6. Procédé de fabrication d'un élément de tension pour un produit gonflable, le procédé comprenant :
fournir une feuille ; et
couper la feuille pour former au moins deux éléments de tension, un premier élément de tension et un deuxième élément de tension ;
dans lequel chaque premier et deuxième élément de tension comprend une base et une pluralité de saillies ;
dans lequel la base et la pluralité de saillies sont formées à partir d'une seule feuille de matériau ; et
dans lequel chaque saillie de la pluralité de saillies du premier élément de tension s'étend à partir de la base dans une même direction et sont espacées les unes des autres et chaque saillie de la pluralité de saillies du deuxième élément de tension s'étend à partir de la base dans une même direction et sont espacées les unes des autres ;
dans lequel le procédé inclut en outre joindre le premier élément de tension au deuxième élément de tension ; dans lequel ladite étape de joindre comprend coupler une extrémité de chaque saillie du premier élément de tension à une extrémité de chaque saillie du deuxième élément de tension.

7. Procédé selon la revendication précédente, incluant en outre fournir un connecteur, dans lequel le connecteur est couplé à chaque saillie de la pluralité de saillies.

8. Procédé selon la revendication 6, dans lequel les au moins deux éléments de tension incluent une pluralité de trois éléments de tension, et le procédé inclut en outre joindre la pluralité de trois éléments de tension ; dans lequel l'étape de joindre comprend coupler une extrémité de chaque saillie de chaque élément de tension de la pluralité de trois éléments de tension les unes aux autres.

9. Procédé de fabrication d'un produit gonflable, dans lequel le produit gonflable comporte une première paroi, une seconde paroi et une paroi latérale, le procédé comprenant :
fournir une feuille ;
couper la feuille pour former au moins deux éléments de tension, un premier élément de tension et un deuxième élément de tension ;
dans lequel chaque premier et deuxième élément de tension comprend une base et une pluralité de saillies ;
dans lequel la base et la pluralité de saillies sont formées à partir d'une seule feuille de matériau ;
dans lequel chaque saillie de la pluralité de saillies du premier élément de tension s'étend à partir de la base dans une même direction et sont espacées les unes des autres et chaque saillie de la pluralité de saillies du deuxième élément de tension s'étend à partir de la base dans une même direction et sont espacées les unes des autres ;
dans lequel le procédé inclut en outre joindre le premier élément de tension au deuxième élément de tension en couplant une extrémité de chaque saillie du premier élément de tension à une extrémité de chaque saillie du deuxième élément de tension ; et
joindre les au moins deux éléments de tension à ladite première paroi et/ou à ladite seconde paroi du produit gonflable en couplant la base du premier élément de tension à la première paroi et la base du deuxième élément de tension à la seconde paroi.

10. Procédé selon la revendication précédente, incluant en outre fournir un connecteur ; dans lequel ladite étape de joindre comprend coupler la base de chaque élément de tension des au moins deux éléments de tension à la première paroi et coupler chaque saillie de la pluralité de saillies de chaque élément de tension des au moins deux éléments de tension à la seconde paroi en utilisant le connecteur.

11. Procédé selon la revendication 9, dans lequel les au moins deux éléments de tension incluent une pluralité de trois éléments de tension, et le procédé inclut en outre :
joindre la pluralité de trois éléments de tension en couplant une extrémité de chaque saillie de chaque élément de tension de la pluralité de trois éléments de tension les unes aux autres ;
dans lequel ladite étape de joindre les au moins deux éléments de tension au produit gonflable comprend coupler la base du premier élément de tension à la première paroi, coupler la base du deuxième élément de tension à la seconde paroi, et coupler la base du troisième élément de tension à la seconde paroi.
